# FASCICULE DE BREVET EUROPEEN

(11) **EP 2 006 587 B1**
(45) Date de publication et mention de la délivrance du brevet: **17.03.2010**
(21) Numéro de dépôt: 08158171.2
(22) Date de dépôt: 12.06.2008
(51) Int. Cl.: F16K 17/04

(54) **Système de clapet d'étanchéité**
Dichtungsventilsystem
Watertight valve system

(30) Priorité: 22.06.2007 FR 0755975
(43) Date de publication de la demande: 24.12.2008
(73) Titulaire: Peugeot Citroën Automobiles SA, 78140 Vélizy-Villacoublay (FR)
(72) Inventeur: Amado, Toni, 94130 Nogent sur Marne (FR); Dufour, Renaud, 95130 PLESSIS BOUCHARD (FR)
(74) Mandataire: Ménès, Catherine

(56) Documents cités:
- WO-A-95/21641
- US-A- 3 027 907
- US-A- 4 592 382

## Description

La présente invention concerne un système de clapet d'étanchéité.

Le document US-A-2004/0000341 divulgue un système de clapet d'étanchéité comprenant deux chambres de pression. A l'intérieur de chaque chambre est prévu un noyau mobile. Le premier noyau est mobile dans la première chambre tandis que le deuxième, bien que mobile dans la deuxième chambre, est soumis à la force de rappel d'un ressort. Tant que la pression de fluide qui s'exerce dans la première chambre reste inférieure à un seuil, le premier noyau vient en butée contre le deuxième noyau sans le déplacer et le fluide s'écoule au travers des orifices prévus dans les noyaux. Lorsque la pression de fluide qui s'exerce dans la première chambre dépasse ledit seuil, le premier noyau vient en butée contre le deuxième noyau et le déplace à l'intérieur de la deuxième chambre en la poussant. Le fluide s'écoule alors autour des noyaux. La mise en oeuvre d'un tel système de clapet nécessite deux éléments mobiles, ce qui est compliqué et coûteux.

Un autre document dans l'état de la technique est WO 95/21641.

L'invention a pour but de remédier aux inconvénients mentionnés ci-dessus en proposant un système de clapet d'étanchéité simple et facile à mettre en oeuvre.

A cet effet, la présente invention concerne un système de clapet d'étanchéité disposé entre un dispositif d'alimentation en fluide et un composant à alimenter en fluide, ledit système comprenant une chambre de pression délimitée par un corps, un élément résistant au fluide, et un moyen de rappel élastique, la chambre de pression comprenant une entrée pour le fluide provenant du dispositif d'alimentation et une sortie vers ledit composant, l'élément résistant au fluide étant mobile dans la chambre de pression et contraint contre ladite entrée par le moyen de rappel élastique, le système de clapet d'étanchéité étant caractérisé en ce qu'une rainure réalisée dans le corps s'étend sur la périphérie de la chambre de pression et en ce qu'un canal de dérivation s'étend entre la rainure et le composant.

Avantageusement, l'élément résistant au fluide est une bille.

Avantageusement, la raideur du moyen de rappel élastique est telle que par augmentation de la valeur de la pression de fluide à l'entrée, le système de clapet d'étanchéité passe successivement d'une position fermée dans laquelle l'élément résistant au fluide obture l'entrée, à une position ouverte intermédiaire dans laquelle l'élément résistant au fluide n'obture ni l'entrée, ni la sortie, ni le canal de dérivation, puis à une position ouverte en butée dans laquelle l'élément résistant au fluide n'obture ni l'entrée, ni le canal de dérivation mais obture la sortie.

Avantageusement, le système de clapet d'étanchéité comprend un dispositif d'étanchéité de la sortie actif lorsque le système de clapet d'étanchéité est dans la position ouverte en butée.

Avantageusement, le dispositif d'étanchéité comprend une couronne centrée sur la sortie et formant un siège pour l'élément résistant au fluide.

Avantageusement, un cylindre étanche est disposé entre l'ouverture centrale de la couronne et la sortie.

L'invention se rapporte également à un circuit de lubrification d'un moteur à combustion interne de véhicule automobile comportant au moins un système de clapet d'étanchéité conforme à l'invention. Pour cette configuration, le fluide est de l'huile.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention et dans lesquels :
- la figure 1 représente un système de clapet d'étanchéité selon l'invention en position fermée ;
- la figure 2 représente le système de clapet d'étanchéité en position ouverte intermédiaire ; et
- la figure 3 représente le système de clapet d'étanchéité en position ouverte en butée.

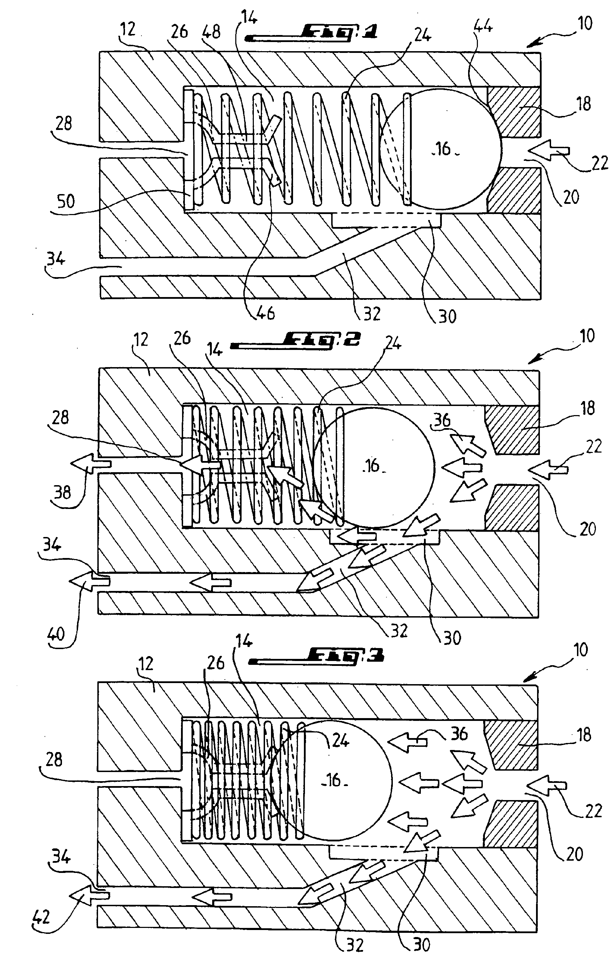

La figure 1 représente un système de clapet d'étanchéité 10 selon l'invention qui est disposé entre un dispositif d'alimentation en fluide 22, par exemple une pompe, et un composant à alimenter en fluide 22. Le fluide 22 est de préférence un fluide incompressible comme de l'huile.

Le système de clapet d'étanchéité 10 comprenant une chambre de pression 14, un élément résistant au fluide 16, par exemple une bille 16, et un moyen de rappel élastique 24.

La chambre de pression 14 est ici sensiblement cylindrique et est délimitée par le corps 12 du système de clapet d'étanchéité 10. La chambre de pression 14 comprend une entrée 20 et une sortie 28. L'entrée 20 et la sortie 28 sont disposées de manière sensiblement coaxiales l'une par rapport à l'autre. Le fluide 22 provenant du dispositif d'alimentation en fluide pénètre dans le système de clapet d'étanchéité 10 par l'entrée 20 et le fluide 22 sort du système de clapet d'étanchéité 10 vers le composant par la sortie 28.

Sur la périphérie de la chambre 14 est réalisée une rainure 30 qui s'étend longitudinalement dans le corps 12. Au fond de cette rainure 30 débouche un canal de dérivation 32 qui débouche à l'extérieur du corps 12 par une sortie de dérivation 34 distincte de la sortie 28. Le canal de dérivation 32 s'étend entre la rainure 30 et le composant. Les éléments en amont de l'entrée 20 sont du côté de la pompe, c'est-à-dire du côté extérieur du composant. Les éléments en aval des sorties 28 et 34 sont du côté intérieur du composant.

Le diamètre de la bille 16 est sensiblement égal au diamètre de la chambre de pression 14 de manière à assurer son guidage à l'intérieur de celle-ci. La bille 16 est prévue pour pouvoir se déplacer le long de l'axe de la chambre 14 sous l'effet du fluide sous pression 22 se présentant à l'entrée 20 de la chambre 14.

Le moyen de rappel élastique 24 qui prend ici la forme d'un ressort hélicoïdale tend à contraindre la bille 16 contre l'entrée 20.

L'entrée 20 est réalisée dans une butée 18 dont la face faisant face à la bille 16 forme un siège 44 sur lequel la bille 16 vient se poser de manière à rendre étanche l'entrée 20.

La figure 1 représente le système de clapet d'étanchéité 10 en position fermée. La pression du fluide 22 qui se présente à l'entrée 20 est insuffisante pour repousser la bille 16 qui reste sur son siège 44 sous l'action du ressort 24 et obture ainsi l'entrée 20. Aucun fluide ne s'écoule en aval de la bille 16. Si la pression dans la chambre de pression 14 est supérieure à la pression à l'entrée 20, la bille 16 est plaquée contre le siège 44 et évite la perte de fluide depuis l'intérieur de la chambre de pression 14 vers l'extérieur.

La figure 2 représente le système de clapet d'étanchéité 10 en position d'ouverture intermédiaire. La pression du fluide 22 est supérieure à la force de rappel du ressort 24. La bille 16 est alors repoussée, libérant ainsi l'entrée 20 et permettant au fluide 22 de pénétrer dans la chambre de pression 14 (flèche 36). Lorsque la pression du fluide 22 devient suffisante, la bille 16 se déplace suffisamment et libère la rainure 30. Le fluide 22 peut alors s'évacuer par le canal de dérivation 32 (flèche 40) et par la sortie 28 (flèche 38). La bille 16 n'obture alors ni l'entrée 20, ni la sortie 28, ni le canal de dérivation 32. Pour faciliter le passage du fluide en aval de la bille 16, la longueur de la rainure 30 doit être suffisante. La section minimale équivalente de sortie du système de clapet d'étanchéité 10 est la somme de la section de la sortie 28 et de la sortie de dérivation 34.

La figure 3 représente le système de clapet d'étanchéité 10 en position ouverte en butée. La pression du fluide 22 augmente encore et repousse la bille 16. La forme de la chambre 14 est telle que le fluide 36 présent dans la chambre 14 peut s'évacuer uniquement par le canal de dérivation 32 (flèche 42). A cet effet, la rainure 30 est limitée longitudinalement de manière à ce que la bille 16 se positionne sur une partie de la chambre 14 où la rainure 30 n'est plus présente. La section minimale équivalente de sortie du système de clapet d'étanchéité 10 est la section de la sortie de dérivation 34. La bille 16 n'obture alors ni l'entrée 20, ni le canal de dérivation 32, mais obture uniquement la sortie 28.

Il peut néanmoins arriver que le fluide 36 passe encore par l'espace entre la bille 16 et la paroi de la chambre 14, mais cet espace est réduit et la quantité de fluide sortant par la sortie 28 est faible. Pour renforcer la fermeture de la sortie 28 et éviter que du fluide sorte par ladite sortie 28, un dispositif d'étanchéité 26 est mis en place en aval de la bille 16. Le dispositif d'étanchéité 26 est actif lorsque le système de clapet d'étanchéité 10 est dans la position ouverte en butée. Dans le mode de réalisation des figures, le dispositif d'étanchéité 26 prend la forme d'un siège formant une couronne 46 centrée autour de la sortie 28 et sur lequel la bille 16 vient se poser sous l'action de la pression du fluide 36. La totalité du fluide s'évacue alors par la sortie de dérivation 34.

Lorsque le système de clapet d'étanchéité 10 est en position ouverte intermédiaire (figure 2), la surface ouverte du dispositif d'étanchéité 26 peut jouer le rôle de limiteur d'évacuation si cette surface est inférieure à la surface de la sortie 28. Dans le cas d'une couronne 46, la surface ouverte du dispositif d'étanchéité 26 est l'aire de l'ouverture centrale de la couronne 46. A cet effet, la couronne 46 se prolonge en aval par un cylindre étanche 48 qui se fixe au fond de la chambre de pression 14 par un pied 50 étanche. Le cylindre étanche 48 est ainsi disposé entre l'ouverture centrale de la couronne 46 et la sortie 28.

La raideur du ressort 24 doit être adaptée aux différents seuils de fonctionnement. C'est-à-dire qu'elle est telle que par augmentation de la valeur de la pression du fluide 22 à l'entrée 20, le système de clapet d'étanchéité 10 passe successivement de la position fermée (figure 1), à la position d'ouverture intermédiaire (figure 2), puis à la position d'ouverture en butée (figure 3).

Le système de clapet d'étanchéité 10 selon l'invention est simple et peu onéreux et permet de maîtriser les débits de fluide.

Le système de clapet d'étanchéité 10 selon l'invention réalise une fonction de clapet anti-retour lorsque la différence des pressions en amont et en aval de la bille 16 est trop faible.

Le système de clapet d'étanchéité 10 ne limite pas l'alimentation en fluide uniquement au cas où la différence des pressions en amont et en aval de la bille 16 est forte au risque de pénaliser les cas où cette différence est faible. En effet, l'utilisation de deux sorties 28 et 34 permet de répartir le débit de fluide en fonction de la pression à l'entrée 20.

Le fonctionnement du système de clapet d'étanchéité 10 est le suivant.

Lorsque la pression P₀ de fluide 22 à l'entrée 20 est insuffisante (figure 1), aucun débit de fluide 22 ne se crée de l'extérieur du composant vers l'intérieur du composant.

Lorsque la pression P₁ de fluide 22 à l'entrée 20 est suffisante pour repousser la bille 16, le système de clapet d'étanchéité 10 passe en position ouverte intermédiaire (figure 2). Un débit de fluide 22 se crée du dispositif d'alimentation en fluide vers l'intérieur du composant (flèches 36, 38, 40). L'alimentation du composant en fluide s'effectue par les sorties 28 et 34 à un débit commandé par la pression à l'entrée 20.

Lorsque la pression P₂ de fluide 22 à l'entrée 20 est suffisante pour repousser encore plus la bille 16, le système de clapet d'étanchéité 10 passe en position ouverte en butée (figure 3). Un débit de fluide 22 se crée du dispositif d'alimentation en fluide vers l'intérieur du composant (flèches 36, 42). L'alimentation du composant en fluide s'effectue uniquement par la sortie de dérivation 34 à un débit commandé par la pression à l'entrée 20. La pression P₂ étant supérieure à la pression P₁, le débit à l'entrée 20 est supérieure dans le cas de la figure 2 à celui de la figure 3. La mise en place de deux sorties 28 et 34 permet d'alimenter le composant avec une seule de ces entrées 34 lorsque le débit à l'entrée devient important. Le système de clapet d'étanchéité 10 selon l'invention limite les débits de fluide au besoin du composant, permet de conserver une puissance hydraulique pour les autres composants, et limite la puissance hydraulique de la pompe par une meilleure répartition en fonction des composants.

Dans le cas de la pression P₁, on obtient une section de sortie importante et une faible perte de charge, tandis que dans le cas de la pression P₂, on obtient une section de sortie réduite et une forte perte de charge.

L'utilisation d'un tel système de clapet d'étanchéité 10 peut s'appliquer sur de nombreux composants comme par exemple :
- une pompe à vide
- une galerie d'alimentation de la commande de soupape
- en amont d'une électrovanne hydraulique pour le pilotage d'un déphaseur d'arbre à cames.
- une rampe d'alimentation gicleur.
- une rampe d'alimentation culasse.

## Revendications

1. Système de clapet d'étanchéité (10) disposé entre un dispositif d'alimentation en fluide (22) et un composant à alimenter en fluide (22), ledit système (10) comprenant une chambre de pression (14) délimitée par un corps (12), un élément résistant au fluide (16), et un moyen de rappel élastique (24), la chambre de pression (14) comprenant une entrée (20) pour le fluide (22) provenant du dispositif d'alimentation et une sortie (28) vers ledit composant, l'élément résistant au fluide (16) étant mobile dans la chambre de pression (14) et contraint contre l'entrée (20) par le moyen de rappel élastique (24), le système de clapet d'étanchéité (10) étant **caractérisé en ce qu'**une rainure (30) réalisée dans le corps (12) s'étend sur la périphérie de la chambre de pression (14) et **en ce qu'**un canal de dérivation (32) s'étend entre la rainure (30) et le composant.

2. Système de clapet d'étanchéité (10) selon la revendication 1, **caractérisé en ce que** l'élément résistant au fluide (16) est une bille.

3. Système de clapet d'étanchéité (10) selon l'une des revendications 1 ou 2, **caractérisé en ce que** la raideur du moyen de rappel élastique (24) est telle que par augmentation de la valeur de la pression de fluide (22) à l'entrée (20), le système de clapet d'étanchéité (10) passe successivement d'une position fermée dans laquelle l'élément résistant au fluide (16) obture l'entrée (20), à une position ouverte intermédiaire dans laquelle l'élément résistant au fluide (16) n'obture ni l'entrée (20), ni la sortie (28), ni le canal de dérivation (32), puis à une position ouverte en butée dans laquelle l'élément résistant au fluide (16) n'obture ni l'entrée (20), ni le canal de dérivation (32) mais obture la sortie (28).

4. Système de clapet d'étanchéité (10) selon la revendication 3, **caractérisé en ce qu'**il comprend un dispositif d'étanchéité (26) de la sortie (28) actif lorsque le système de clapet d'étanchéité (10) est dans la position ouverte en butée.

5. Système de clapet d'étanchéité (10) selon la revendication 4, **caractérisé en ce que** le dispositif d'étanchéité (26) comprend une couronne (46) centrée sur la sortie (28) et formant un siège pour l'élément résistant au fluide (16).

6. Système de clapet d'étanchéité (10) selon la revendication 5, **caractérisé en ce qu'**un cylindre étanche (48) est disposé entre l'ouverture centrale de la couronne (46) et la sortie (28).

7. Circuit de lubrification d'un moteur à combustion interne de véhicule automobile, **caractérisé en ce qu'**il comporte au moins un système de clapet d'étanchéité conforme à l'une quelconque des revendications 1 à 6.

## Claims

1. A tightness valve system (10) arranged between a device for supply of fluid (22) and a component to be supplied with fluid (22), the said system (10) comprising a pressure chamber (14) delimited by a body (12), a fluid resistant element (16), and an elastic return means (24), the pressure chamber (14) comprising an inlet (20) for the fluid (22) originating from the supply device, and an outlet (28) towards the said component, the fluid resistant element (16) being movable in the pressure chamber (14) and constrained against the inlet (20) by the elastic return means (24), the tightness valve system (10) being **characterized in that** a groove (30) formed in the body (12) extends over the periphery of the pressure chamber (14) and **in that** a bypass channel (32) extends between the groove (30) and the component.

2. The tightness valve system (10) according to Claim 1, **characterized in that** the fluid resistant element (16) is a ball.

3. The tightness valve system (10) according to one of Claims 1 or 2, **characterized in that** the stiffness of the elastic return means (24) is such that by increasing the value of the pressure of the fluid (22) at the inlet (20), the tightness valve system (10) passes successively from a closed position, in which the fluid resistant element (16) closes off the inlet (20), to an intermediate open position, in which the fluid resistant element (16) does not close off either the inlet (20) or the outlet (28), or the bypass channel (32), then to an open position in abutment, in which the fluid resistant element (16) does not close off either the inlet (20), or the bypass channel (32), but closes off the outlet (28).

4. The tightness valve system (10) according to Claim 3, **characterized in that** it comprises a tightness device (26) of the outlet (28) which is active when the tightness valve system (10) is in the open position in abutment.

5. The tightness valve system (10) according to Claim 4, **characterized in that** the tightness device (26) comprises a crown (46) centred on the outlet (28) and forming a seat for the fluid resistant element (16).

6. The tightness valve system (10) according to Claim 5, **characterized in that** a tight cylinder (48) is arranged between the central opening of the crown (46) and the outlet (28).

7. A lubrication circuit of an internal combustion engine of an automobile vehicle, **characterized in that** it comprises at least one tightness valve system according to any one of Claims 1 to 6.

## Patentansprüche

1. Dichtventilsystem (10), das zwischen einer Vorrichtung zum Versorgen mit Fluid (22) und einem mit Fluid (22) zu versorgenden Bauteil angeordnet ist, wobei das System (10) eine Druckkammer (14) aufweist, die von einem Körper (12) abgegrenzt ist, aus einem dem Fluid widerstehenden Element (16), und aus einem elastischen Rückholmittel (24), wobei die Druckkammer (14) einen Eingang (20) für das Fluid (22), das von der Versorgungsvorrichtung kommt, und einen Ausgang (28) zu dem Bauteil aufweist, wobei das dem Fluid widerstehende Element (16) in der Druckkammer (14) beweglich ist und von dem elastischen Rückholmittel (24) gegen den Eingang (20) gezwängt wird, Dichtventilsystem (10), **dadurch gekennzeichnet, dass** sich eine Rille (30), die in dem Körper (12) hergestellt ist, auf dem Umfang der Druckkammer (14) erstreckt, und dass sich ein Umleitkanal (32) zwischen der Rille (30) und dem Bauteil erstreckt.

2. Dichtventilsystem (10) nach Anspruch 1, **dadurch gekennzeichnet, dass** das dem Fluid widerstehende Element (16) eine Kugel ist.

3. Dichtventilsystem (10) nach einem der Ansprüche 1 oder 2, **dadurch gekennzeichnet, dass** die Steifigkeit des elastischen Rückholmittels (24) derart ist, dass das Dichtventilsystem (10) durch Erhöhen des Werts des Fluiddrucks (22) an dem Eingang (20) nacheinander von einer geschlossenen Position, in der das dem Fluid widerstehende Element (16) den Eingang (20) verschließt, auf eine offene Zwischenposition, in der das dem Fluid widerstehende Fluid (16) weder den Eingang (20) noch den Ausgang (28) noch den Umleitkanal (32) verschließt, übergeht, und dann auf eine offene Position im Anschlag, in der das dem Fluid widerstehende Element (16) weder den Eingang (20) noch den Umleitkanal (32) verschließt, sondern den Ausgang (28).

4. Dichtventilsystem (10) nach Anspruch 3, **dadurch gekennzeichnet, dass** es eine Dichtvorrichtung (26) des Ausgangs (28) aufweist, die aktiv ist, wenn sich das Dichtventilsystem (10) in der offenen Position im Anschlag befindet.

5. Dichtventilsystem (10) nach Anspruch 4, **dadurch gekennzeichnet, dass** die Dichtvorrichtung (26) einen Kranz (46) aufweist, der auf dem Ausgang (28) unter Bilden eines Sitzes für das dem Fluid widerstehende Element (16) zentriert ist.

6. Dichtventilsystem (10) nach Anspruch 5, **dadurch gekennzeichnet, dass** ein dichter Zylinder (48) zwischen der zentralen Öffnung des Kranzes (46) und dem Ausgang (28) angeordnet ist.

7. Schmierkreislauf eines Verbrennungsmotors für Kraftfahrzeug, **dadurch gekennzeichnet, dass** er mindestens ein Dichtventilsystem nach einem der Ansprüche 1 bis 6 aufweist.
